# DEMANDE DE BREVET EUROPEEN

(11) **EP 1 712 803 A1**
(43) Date de publication de la demande: **18.10.2006**
(21) Numéro de dépôt: 06112636.3
(22) Date de dépôt: 13.04.2006
(51) Int. Cl.: F16B 37/06, F16B 19/02

(54) **Procédé d'assemblage de deux pièces dont l'une au moins est en matériau composite, avec un insert pour la réalisation de l'assemblage et qui permet la correction des tolérances par usinage**

(30) Priorité: 15.04.2005 FR 0550966
(71) Demandeur: SNECMA, 75015 Paris (FR)
(72) Inventeur: Blanchard, Stéphane, 77590, CHARTRETTES (FR); Vuillemenot, Yann, 75011, PARIS (FR)
(74) Mandataire: David, Daniel

(57) **Abrégé**

La présente invention porte sur un procédé pour lier une première pièce (31) en matériau composite à matrice céramique à une deuxième pièce (34), selon une cote déterminée (A), caractérisé par le fait que l'on rapporte un insert (32) sur ladite première pièce (31) ledit insert (32) présentant une surépaisseur par rapport à ladite cote (A), on usine l'insert (32) jusqu'à ce que sa surface soit à ladite cote déterminée, on place ladite deuxième pièce (34) sur l'insert (32) et on solidarise la deuxième pièce par l'intermédiaire de l'insert.

L'emploi d'un insert permet la réalisation d'un assemblage reproductible avec précision tout en étant démontable.

## Description

L'invention concerne le domaine des matériaux composites et leur application en particulier dans les turbomachines aéronautiques.

Dans le domaine de l'aéronautique, notamment, un objectif constant est de réaliser des pièces présentant une grande résistance mécanique dans un environnement défavorable pour une masse et un encombrement minimaux. C'est ainsi que certaines pièces sont réalisées à partir d'un matériau composite à matrice céramique (CMC), tel que par exemple un composite SiC/SiC élaboré pour des utilisations de longue durée à des températures élevées. Un tel composite est constitué d'un renfort multidirectionnel en carbure de silicium et d'une matrice également en carbure de silicium. Cette dernière confère au matériau des propriétés exceptionnelles de tenue en fatigue thermomécanique, en environnement oxydant, à des températures pouvant atteindre 1400°C. Ces matériaux sont actuellement utilisés pour la fabrication de pièces de moteurs d'avions : volets de tuyère, chambre de combustion et système de réchauffe. Ce sont les fibres qui reprennent les efforts, la matrice assurant une fonction de liant avec le reste de la pièce, de protection et d'isolation des fibres, qui ne doivent pas entrer en contact avec l'atmosphère oxydante.

Les difficultés d'intégration d'un matériau composite, CMC en particulier, dans un environnement quelconque sont liées à ses tolérances de fabrication : l'enveloppe géométrique de ce matériau peut varier jusqu'à +/- 0,55 mm dans l'épaisseur.

Lorsqu'on procède à l'assemblage d'une telle pièce avec une autre pièce en CMC ou bien métallique, on a jusqu'à présent utilisé la technique d'appairage. Cependant avec cette technique on ne peut coter les pièces séparément, on cote l'assemblage. Utilisée en développement, cette méthode n'est pas transposable économiquement à la production en série. En particulier, l'appairage supprime l'interchangeabilité des pièces puisqu'il n'existe pas de définition unique. De plus l'appairage est un procédé coûteux aussi bien en production qu'en service après vente pour la rechange.

L'invention a donc pour objet un procédé permettant d'associer une première pièce en matériau composite notamment de type CMC (composite à matrice céramique) présentant en soi une tolérance de fabrication relativement importante, avec précision à une deuxième pièce, tout en permettant le remplacement éventuel de la deuxième pièce dans le cadre d'une réparation par exemple.

On parvient à réaliser cet objectif avec un procédé pour lier une première pièce en matériau composite à matrice céramique à une deuxième pièce, selon une cote déterminée, caractérisé par le fait que l'on rapporte un insert sur ladite première pièce, ledit insert présentant une surépaisseur par rapport à ladite cote, on usine l'insert jusqu'à ce que sa surface soit à ladite cote déterminée, on place ladite deuxième pièce sur l'insert et on solidarise la deuxième pièce à la première pièce par l'intermédiaire de l'insert.

Grâce à l'emploi d'un insert de préférence métallique, que l'on peut ainsi usiner avec précision, on parvient de manière très simple et économique à placer la deuxième pièce par rapport à la première selon la cote voulue. On risquerait d'altérer les propriétés du matériau composite en usinant, éventuellement directement, la matrice du matériau sur une grande partie de la surface d'appui entre les deux pièces, ceci mettant les fibres à nu.

Plus précisément, on perce un logement dans la première pièce pour y loger l'insert. On utilise avantageusement un insert avec une partie cylindrique et un épaulement, on place l'insert par sa partie cylindrique dans le logement jusqu'à son épaulement, et on solidarise l'insert au moyen d'une rondelle que l'on brase sur la face opposée à celle de l'épaulement. Ce mode de fixation de l'insert dans le logement de la première pièce permet de préserver au mieux le matériau sans risquer la corrosion. Notamment on choisit une température de brasage supérieure à celle de fonctionnement. Ainsi comme l'insert métallique se dilate plus fortement que le matériau CMC, il suffit de mettre en place et d'ajuster la rondelle à chaud. Le métal en refroidissant se rétracte et la plaque de CMC se retrouve pincé entre la rondelle et l'épaulement au refroidissement ou en fonctionnement jusqu'à une température inférieure à celle du brasage.

Selon l'application, on usine la portion de l'insert avec épaulement et/ou la partie cylindrique de l'insert.

De préférence, on solidarise la deuxième pièce à la première pièce au moyen d'un rivet, d'un pion soudé ou d'un boulon traversant l'insert dans l'axe de la partie cylindrique.

L'invention porte également sur l'insert pour mise en oeuvre du procédé selon lequel on lie une première pièce d'épaisseur déterminée à une deuxième pièce avec une cote d'assemblage déterminée. Il est caractérisé par le fait que la partie cylindrique est de hauteur supérieure à l'épaisseur de la première pièce, l'épaulement présentant une surépaisseur susceptible d'être usinée. Avantageusement, l'insert présente un alésage central traversant la partie cylindrique et l'épaulement. Plus particulièrement, l'épaulement présente un moyen de serrage pour immobiliser l'insert pendant l'usinage.

On décrit maintenant l'invention plus en détail, en référence aux dessins annexés sur lesquels
- la figure 1 montre en perspective un bras accroche flamme d'un dispositif de postcombustion dans un turboréacteur,
- la figure 2 est une vue en coupe selon la direction II-II du bras de la figure 1,
- la figure 3 et une vue partielle en coupe d'une première pièce à assembler avec un insert conforme à l'invention,
- la figure 4 montre les deux pièces assemblées conformément à l'invention,
- la figure 5 montre une variante de l'insert vu de dessus,
- la figure 6 montre une autre variante de l'insert,
- les figures 7 et 8 montrent une autre application du mode d'assemblage selon l'invention.

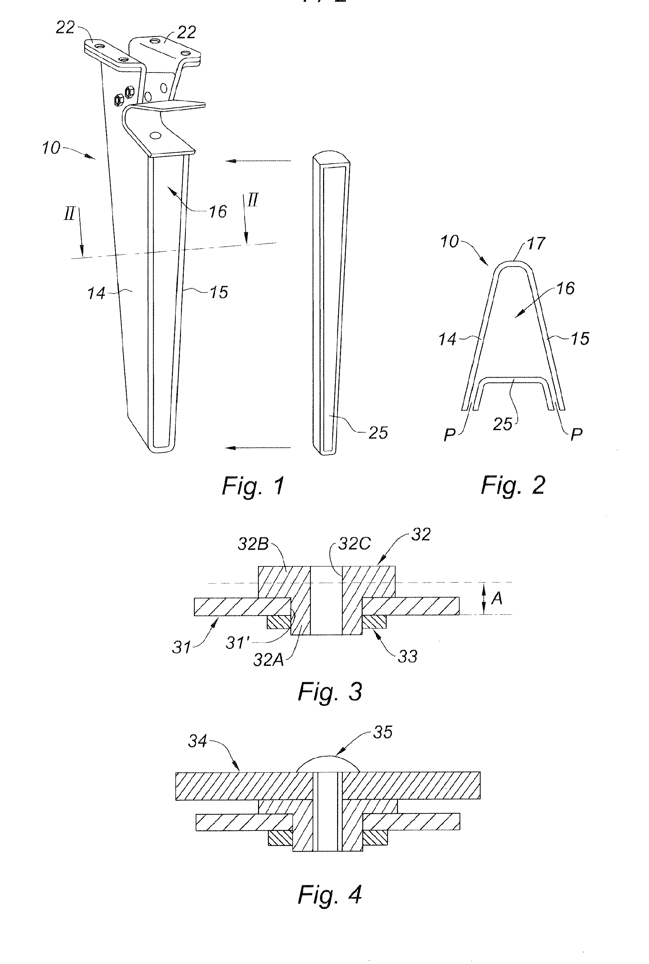

Sur la figure 1 et en coupe sur la figure 2, on a représenté un bras accroche flamme 10 tel qu'utilisé dans un système de postcombustion d'un turboréacteur. Ce bras est réalisé en matériau composite comme cela est décrit dans la demande de brevet FR 04 00 651 déposée par la demanderesse. Le matériau composite, de type CMC (composite à matrice céramique) permet la réalisation d'une structure monobloc, ici en forme de V avec deux parois 14 et 15 s'écartant l'une de l'autre depuis une arête 17. Le bras comprend deux brides 20 et 22 de fixation au carter extérieur du canal de post combustion. La cavité allongée 16, ménagée entre les deux parois et tournée vers l'aval du canal, sert à la distribution d'une mélange air - combustible dans la veine du flux primaire. Un capot ou écran 25, représenté en éclaté sur la figure 1, vient fermer partiellement la cavité 16 tout en ménageant un espace périphérique P, à travers lequel le mélange combustible est injecté dans la veine de gaz. Il est important que le montage soit précis car l'espacement entre les parois 14 et 15 du bras et ceux du capot 25 règle le débit du mélange. Il se pose alors un problème en raison de la nature du matériau composite dont sont constitués les composants. Il n'est pas possible de compenser les variations géométriques de la pièce en usinant le matériau composite pour ajuster la position d'une pièce par rapport à l'autre en raison des risques de corrosion des fibres lorsque la température de travail de la pièce est supérieure à 300°C. Par ailleurs un montage selon une technique d'appairage n'autoriserait pas une réparation avec remplacement d'un élément car les cotes seraient perdues.

Conformément à l'invention, on compense les variations géométriques du matériau composite par l'intermédiaire d'un insert métallique ou équivalent que l'on peut usiner à la cote voulue. Cet insert solidaire de la pièce en matériau composite assure des frontières géométriques reproductibles et autorise un remplacement aisé d'un élément par une pièce de rechange.

L'invention ne se limite pas au montage d'un élément sur un bras accroche flamme d'un système de post combustion mais à l'assemblage de toutes pièces dont l'une est en un matériau composite notamment de type CMC, nécessitant un ajustement précis et étant réparable par changement de pièce.

On a représenté sur les figures 3 et 4, un mode d'assemblage conforme à l'invention.

On souhaite assembler une première pièce 31, en un matériau composite de type CMC à une deuxième pièce 34 qui peut être également de type CMC ou simplement métallique. Si la deuxième pièce est également en CMC, il peut être avantageux de monter un deuxième insert usinable sur la deuxième pièce, le contact se faisant entre les deux surfaces usinées des deux inserts.

Comme on le voit sur la figure 3, la pièce 31 présente une partie d'épaisseur déterminée qui constitue la zone de fixation à la deuxième pièce 34. Un insert 32 est logé dans un perçage de la pièce 31. L'insert 32 est composé d'une partie cylindrique 32A et d'une partie avec épaulement 32B. La partie cylindrique est logée dans le perçage 31' de la pièce et est suffisamment longue pour déboucher du côté opposé à l'épaulement de la partie 32B. Une rondelle 33 est brasée sur la partie libre de l'élément cylindrique 32A. La pièce 31 est ainsi maintenue serrée entre la rondelle et l'épaulement 32B. L'épaisseur E de l'élément épaulé 32B de l'insert est choisie de façon que sa face libre soit plus haute que le niveau A. Ce niveau A est celui de la cote désirée. Cette cote est ici déterminée par rapport à la face de la pièce 31 opposée à l'épaulement 32B. La cote pourrait être déterminée à partir d'une autre référence.

On procède de la façon suivante:

On usine dans la pièce 31 un perçage 31' susceptible de recevoir la partie 32A de l'insert 32. Le cas échéant, c'est-à-dire lorsqu'on veut éviter tout risque de corrosion des fibres en fonctionnement, on traite les bords de la zone percée de façon à reconstituer une matrice de protection des fibres du composite.

On observe qu'il ne serait pas possible de procéder de même sur une surface d'appui puisque la matrice reconstituée sur une zone surfacée à une cote précise ne serait pas d'épaisseur constante, d'où l'intérêt de l'insert.

On met en place l'insert 32 dans le perçage, et on brase une rondelle 33 sur son bord libre par l'intermédiaire par exemple d'une brasure. Les matériaux utilisés pour l'insert et la brasure sont par exemple un alliage à base cobalt tel que le HS25 ou le L605. Ce matériau serait utilisé à la fois pour une application froide (partie haute du bras par exemple dans l'exemple considéré ici) et une application chaude (partie du bras balayée par le flux primaire).

Le brasage est préféré au soudage afin de limiter les contraintes d'origine thermique dans la pièce en CMC lors de l'assemblage.

Sur la figure 4 on a représenté les deux pièces liées ensemble conformément à l'invention. L'insert a été usiné à la cote A et la deuxième pièce mise en contact avec la face usinée de l'insert. Cette deuxième pièce peut être en matériau composite comme la première ou bien métallique. La liaison est obtenue ici par rivetage au travers de l'alésage 32C ménagé à travers l'insert 32. Le rivet 35 enserre les deux faces opposées libres : l'une étant celle de la pièce 34 l'autre étant celle de la partie cylindrique 32A de l'insert.

Ainsi grâce à la solution de l'invention, on a pu assembler deux pièces 31 et 34 avec précision indépendamment des tolérances d'épaisseur de l'une ou l'autre des deux pièces. Cet assemblage est par ailleurs aisément démontable on peut remplacer la pièce 34 par une autre le cas échéant, la cote est conservée puisque déterminée par l'insert usiné.

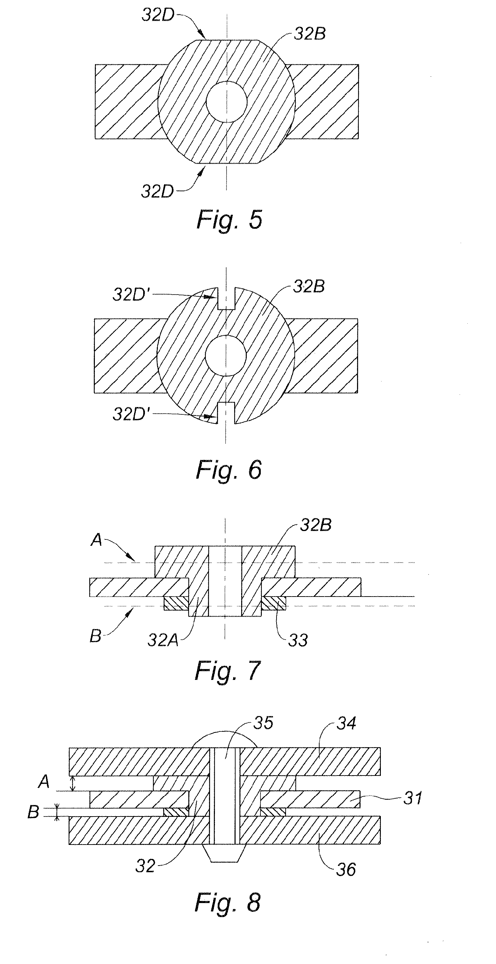

Sur la figure 5, on a représenté une variante de réalisation de l'insert, la partie épaulée 32B comporte selon cette variante deux méplats 32D usiné parallèlement l'un à l'autre selon l'axe de la partie cylindrique 32A ce moyen a pour fonction de mettre en place un montage de serrage de l'insert pendant l'usinage de mise à la cote.

Sur la figure 6 on a représenté une autre variante par rapport à la figure 5. Il s'agit de deux encoches 32D' coopérant avec un outil de serrage pendant l'opération d'usinage lors la mise à la cote de l'insert.

En référence aux figures 7 et 8, on illustre la mise en oeuvre de l'invention dans le cadre d'une autre application. Il s'agit dans ce cas d'assembler une première pièce 31 à une deuxième 34 et une troisième pièce 36. L'assemblage entre la première pièce 31 et la deuxième pièce 34 est effectué à la cote A et l'assemblage entre la première pièce 31 et la troisième pièce 36 est effectué à la cote B. dans ce but on utilise un insert 32 dont la partie cylindrique 32A et la partie épaulée 32B présentent chacune une surépaisseur suffisante pour pouvoir être usinées à la cote voulue A et B respectivement. Un seul rivet assure la liaison entre les trois pièces.

## Revendications

1. Procédé pour lier une première pièce (31) en matériau composite à matrice céramique à une deuxième pièce (34), selon une cote déterminée (A), **caractérisé par le fait que** l'on rapporte un insert (32) sur ladite première pièce (31) ledit insert (32) présentant une surépaisseur par rapport à ladite cote (A), on usine l'insert (32) jusqu'à ce que sa surface soit à ladite cote déterminée, on place ladite deuxième pièce (34) sur l'insert (32) et on solidarise la deuxième pièce par l'intermédiaire de l'insert.

2. Procédé selon la revendication précédente, selon lequel on perce un logement (31') dans la première pièce (31) pour y loger l'insert (32).

3. Procédé selon la revendication précédente, dont l'insert (32) présente une partie cylindrique (32A) et une partie (32B) avec épaulement, on place l'insert par sa partie cylindrique (32A) dans le logement (31') jusqu'à son épaulement, on solidarise l'insert au moyen d'une rondelle (33) que l'on brase sur la face de la pièce (31) opposée à celle de l'épaulement (32B).

4. Procédé selon la revendication précédente, dont la température de brasage est supérieure à celle de fonctionnement de l'assemblage (31, 34) de manière à obtenir un pincement de l'insert sur la première pièce (31).

5. Procédé selon l'une des revendications 3 et 4 selon lequel on usine la partie (32B) de l'insert avec épaulement et/ou la partie cylindrique (32A) de l'insert.

6. Procédé selon l'une des revendications précédentes selon lequel on solidarise la deuxième pièce (34) à la première pièce (31) au moyen (35) d'un rivet, d'un pion soudé ou d'un boulon traversant l'insert dans l'axe de la partie cylindrique (32A).

7. Procédé selon l'une des revendications précédentes selon lequel on assemble une troisième pièce par l'intermédiaire de l'insert (32).

8. Insert pour mise en oeuvre du procédé selon l'une des revendications précédentes selon lequel on lie une première pièce (31) d'épaisseur déterminée à une deuxième pièce (34) avec une cote d'assemblage déterminée, **caractérisé par le fait que** la partie cylindrique (32A) est de hauteur supérieure à l'épaisseur de la première pièce (31), l'épaulement (32B) présentant une surépaisseur susceptible d'être usinée.

9. Insert selon la revendication précédente présentant un alésage (32C) central traversant la partie cylindrique (32A) et l'épaulement (32B).

10. Insert selon l'une des revendications 8 et 9 dont l'épaulement (32B) présente un moyen de serrage (32D) pour immobiliser l'insert pendant l'usinage.
